(19) Europäisches Patentamt / European Patent Office / Office européen des brevets

(11) **EP 4 512 518 A2**

(12) **EUROPEAN PATENT APPLICATION**

(43) Date of publication:
**26.02.2025 Bulletin 2025/09**

(21) Application number: **24180819.5**

(22) Date of filing: **07.06.2024**

(51) International Patent Classification (IPC):
***B01J 13/00*** *(2006.01)*

(52) Cooperative Patent Classification (CPC):
**B01J 13/0091**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.07.2023 KR 20230098058**

(71) Applicant: **Samsung SDI Co., Ltd.**
**Yongin-si, Gyeonggi-do 17084 (KR)**

(72) Inventors:
• **Lee, Jae Hyun**
 **Yongin-si, Gyeonggi-do 17084 (KR)**

• **Ryu, Bo Kyung**
 **Yongin-si, Gyeonggi-do 17084 (KR)**
• **Yang, Seung Yong**
 **Yongin-si, Gyeonggi-do 17084 (KR)**
• **Park, Hye Jin**
 **Yongin-si, Gyeonggi-do 17084 (KR)**
• **Ra, Ha Na**
 **Yongin-si, Gyeonggi-do 17084 (KR)**
• **Woo, Myung Heui**
 **Yongin-si, Gyeonggi-do 17084 (KR)**
• **Kim, Sang Hoon**
 **Yongin-si, Gyeonggi-do 17084 (KR)**

(74) Representative: **Gulde & Partner**
**Patent- und Rechtsanwaltskanzlei mbB**
**Berliner Freiheit 2**
**10785 Berlin (DE)**

(54) **INSULATION COMPOSITION FOR BATTERY DEVICE, METHOD FOR PREPARING THE SAME, SHEET FORMED USING THE SAME, AND BATTERY MODULE COMPRISING THE SAME**

(57) An aerogel composition for battery insulation sheets includes a reinforcement material including two or more fibrous supports, an aerogel, a functional material including a binder, a dispersant, or a combination thereof, and a solvent, wherein the two or more fibrous supports have different aspect ratios (AR) as represented by Formula 1:

**Formula 1**

$$AR = L/D,$$

where in Formula 1, L indicates an average length of a fibrous support of the two or more fibrous supports and D indicates an average diameter of the two or more fibrous supports.

EP 4 512 518 A2

FIG. 1

**Description**

**BACKGROUND**

**1. Field**

One or more aspects of embodiments of the present disclosure are directed toward an aerogel composition for battery insulation sheets, a method of manufacturing the aerogel composition, a battery insulation sheet formed using the aerogel composition, and a method of manufacturing the battery insulation sheet.

**2. Description of the Related Art**

A secondary battery is a power storage system that converts electrical energy into chemical energy, stores the chemical energy, and provides suitably high energy density. Compared to a primary battery, which is not rechargeable, a secondary battery is rechargeable and is widely used in information technology (IT) (e.g., electronic) devices such as smartphones, cellular phones, laptop computers, and/or tablet computers. Recently, there has been increased interest in electric vehicles as a result of the effort to prevent or reduce environmental pollution, and a high-capacity secondary battery is being adopted in such electric vehicles. The secondary battery requires (or should possess) characteristics such as suitably high density, suitably high output, and/or stability.

If a plurality of high-capacity cells is included, as in a lithium secondary battery, one cell may overheat and may go into thermal runaway for one or more reasons, which may adversely affect other cells adjacent thereto, and therefore it is desirable to thermally isolate neighboring cells from each other.

In comparable batteries, a plate and/or an insulating resin sheet may be arranged between cells to isolate and insulate neighboring cells from each other.

The information disclosed in this section is provided only for enhancement of understanding of the background of the disclosure and therefore it may contain information that does not form the prior art.

**SUMMARY**

The invention is defined by the appended claims. The description that follows is subjected to this limitation. Any disclosure lying outside the scope of said claims is only intended for illustrative as well as comparative purposes. One or more aspects of embodiments of the present disclosure are directed toward an aerogel composition having excellent or suitable thermal insulation, fire resistance, mechanical properties, and/or dustiness, a method of manufacturing the aerogel composition, a battery insulation sheet formed using the aerogel composition, and a method of manufacturing the battery insulation sheet. Additional aspects will be set forth in part in the description which follows and, in part, will be apparent from the description, or may be learned by practice of the presented embodiments of the disclosure.

One or more embodiments provide an aerogel composition (e.g., for battery insulation sheets), the aerogel composition including a reinforcement material including two or more fibrous supports, an aerogel, a functional material including a binder, a dispersant, or a combination thereof, and a solvent, wherein the two or more fibrous supports have different aspect ratios (AR) as represented by Formula 1:

## Formula 1

$$AR = L/D.$$

In Formula 1, L indicates an average length of each fibrous support of the two or more fibrous supports and D indicates an average diameter of each fibrous support of the two or more fibrous supports.

The aspect ratio difference between the two or more fibrous supports may be 1 to 5,000.

The reinforcement material may include two or more selected from the group consisting of a first fibrous support, a second fibrous support, and a third fibrous support.

The aspect ratio of the first fibrous support may be 1 to 500, the average diameter of the first fibrous support may be 8 $\mu$m to 12 $\mu$m, and the average length of the first fibrous support may be 100 $\mu$m to 3,000 $\mu$m.

The aspect ratio of the second fibrous support may be 2.5 to 2,500, the average diameter of the second fibrous support may be 8 $\mu$m to 20 $\mu$m, and the average length of the second fibrous support may be 50 $\mu$m to 20,000 $\mu$m.

The aspect ratio of the third fibrous support may be 300 to 5,000, the average diameter of the third fibrous support may be 8 $\mu$m to 12 $\mu$m, and the average length of the third fibrous support may be 3,000 $\mu$m to 50,000 $\mu$m.

The first fibrous support may be included in an amount of 10 to 60 parts by weight, the second fibrous support may be included in an amount of 30 to 60 parts by weight, and the third fibrous support may be included in an amount of 10 to 60 parts by weight, based on 100 parts by weight of the reinforcement material.

The aerogel may have a BET (Brunauer, Emmett and Teller) specific surface area of 500 $m^2/g$ to 1,000 $m^2/g$.

The aerogel may have an average particle size (D50) of 5 $\mu$m to 200 $\mu$m.

The ratio of the average particle size of the aerogel to the average length of the fibrous support may be 1:1 to 1:10,000.

The binder may include an aqueous polymer binder, and the aqueous polymer binder may be at least one selected from the group consisting of a water-based polymer, an anionic water-soluble polymer, a cationic water-soluble polymer, and a water-dispersible polymer.

The binder may be included in an amount of 0.5 wt% to 20 wt% based on the total amount of solids in the aerogel composition.

The dispersant may be at least one selected from the group consisting of a surfactant and a phosphate-based salt.

The dispersant may be included in an amount of 0.1 wt% to 6 wt% based on the total amount of solids in the aerogel composition.

The solvent may be at least one selected from the group consisting of a polar solvent and a non-polar solvent.

The reinforcement material may be included in an amount of 5 wt% to 70 wt%, the aerogel may be included in an amount of 10 wt% to 90 wt%, and the functional material may be included in an amount of 0.5 wt% to 20 wt%, based on the total amount of solids in the aerogel composition.

One or more embodiments provide a method of manufacturing an aerogel composition for battery insulation sheets, the method including mixing a solvent with a functional material including a binder, a dispersant, or a combination thereof to manufacture a solvent mixture, mixing the solvent mixture with an aerogel to manufacture an aerogel mixture, and mixing the aerogel mixture with a reinforcement material to manufacture an aerogel composition, wherein the reinforcing material includes two or more fibrous supports, and the two or more fibrous supports have different aspect ratios (AR) as represented by Formula 1:

## Formula 1

$$AR = L/D.$$

In Formula 1, L indicates an average length of each fibrous support of the two or more fibrous supports and D indicates an average diameter of each fibrous support of the two or more fibrous supports.

One or more embodiments provide a battery insulation sheet including a first substrate, a second substrate, and an aerogel layer formed between the first substrate and the second substrate, wherein the aerogel layer is formed using the aerogel composition.

One or more embodiments provide a method of manufacturing a battery insulation sheet, the method including applying the aerogel composition to a first substrate and laminating a second substrate on the applied aerogel composition to form a laminate.

The method may further include pressing and drying the laminate.

**BRIEF DESCRIPTION OF THE DRAWINGS**

The accompanying drawings, which are incorporated in this specification, illustrate example embodiments and serve to further illustrate the technical ideas of the disclosure in conjunction with the detailed description of example embodiments that follows, and the disclosure is not to be construed as limited to what is shown in such drawings. In the drawings:

FIG. 1 is a schematic view showing the structure of a battery insulation sheet according to one or more embodiments;

FIG. 2 is a schematic view showing the battery insulation sheet according to the one or more embodiments formed between a plurality of cells;

FIG. 3 is an SEM (scanning electron microscope) image of an aerogel layer of a battery insulation sheet according to Example 1;

FIG. 4 is an SEM image of an aerogel layer of a battery insulation sheet according to Comparative Example 1;

FIG. 5 is an SEM image of an aerogel layer of a battery insulation sheet according to Comparative Example 2;

FIG. 6 is an SEM image of an aerogel layer of a battery insulation sheet according to Comparative Example 3; and

FIG. 7 is an SEM image of an aerogel layer of a battery insulation sheet according to Comparative Example 4.

**DETAILED DESCRIPTION OF EXEMPLARY EMBODIMENTS**

Hereinafter, embodiments will be described in more detail such that a person having ordinary skill in the art can easily implement the embodiments. However, embodiments may be implemented in many different forms and are not limited to the embodiments described herein.

It will be understood that, although the terms first, second, etc. may be used herein to describe various elements, these elements should not be limited by these terms. These terms are only used to distinguish one element from another element. Thus, a first element could be termed a second element without departing from the teachings of the present invention. Similarly, a second element could be termed a first element.

As used herein, the singular forms "a," "an," and "the" are intended to include the plural forms as well, unless the context clearly indicates otherwise.

It will be further understood that the terms "includes," "including," "comprises," and/or "comprising," when used in this specification, specify the presence of stated features, steps, operations, elements, and/or components, but do not preclude the presence or addition of one or more other features, steps, operations, elements, components, and/or groups thereof.

As used herein, the terms "use," "using," and "used" may be considered synonymous with the terms "utilize," "utilizing," and "utilized," respectively.

As used herein, expressions such as "at least one of", "one of", and "selected from", when preceding a list of elements, modify the entire list of elements and do not modify the individual elements of the list. For example, "at least one selected from among a, b and c", "at least one of a, b or c", and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

As used herein, the term "and/or" includes any and all combinations of one or more of the associated listed items.

Further, the use of "may" when describing embodiments of the present disclosure refers to "one or more embodiments of the present disclosure".

It will be understood that when an element is referred to as being "on," "connected to," or "coupled to" another element, it may be directly on, connected, or coupled to the other element or one or more intervening elements may also be present. When an element is referred to as being "directly on," "directly connected to," or "directly coupled to" another element, there are no intervening elements present.

Spatially relative terms, such as "beneath," "below," "lower," "above," "upper," "bottom," "top" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

An insulating material (e.g., thermal or heat insulator), which is a material that prevents or reduces the flow of heat (e.g., energy) from higher to lower temperatures, may be used not only in refrigerators, cold storages, and/or buildings, but also in a variety of other industries, including aircraft, electronics, and/or automotive industries.

The insulating material needs to have (e.g., it is desirable that the insulating material has) excellent or suitable thermal insulation performance through suitable thermal conductivity (e.g., relatively low thermal conductivity) and mechanical strength to maintain (or substantially maintain) thermal insulation performance over time.

An aerogel, which is a transparent and/or translucent advanced material having a nanoporous structure, may exhibit very (or substantially) low density and suitably low thermal conductivity, and therefore the aerogel may have a suitably high potential as an insulating material and is considered to be a highly efficient super insulating material that can be used in a variety of industrial applications.

One of the biggest advantage of the aerogel is that the aerogel has lower thermal conductivity than comparable organic insulating materials such as Styrofoam™ and that the aerogel is capable (e.g., potentially capable) of solving some of the critical weaknesses of organic insulating materials, such as fire vulnerability and/or generation of harmful gases in the event of fire.

However, the aerogel has been found to be highly brittle, easily breaking upon slight impact, and rather difficult to process into very small thicknesses and shapes, making it very difficult to manufacture an insulation material using the aerogel alone despite its excellent or suitable thermal insulation.

An aerogel composition according to one or more embodiments may include a reinforcement material including two or more fibrous supports, an aerogel, a functional material including a binder, a dispersant, or a combination thereof, and a solvent, wherein the two or more fibrous supports may have different aspect ratios AR as represented by Formula 1:

## Formula 1

$$AR = L/D.$$

In Formula 1, L indicates the average length of the fibrous support and D indicates the average diameter of the fibrous support.

A battery insulation sheet manufactured using the aerogel composition including the above components may have excellent or suitable thermal insulation, fire resistance, and/or mechanical properties, suitably low manufacturing process cost, and at the same time (e.g., simultaneously or concurrently) may prevent or reduce generation of dust from the aerogel during a manufacturing process and during actual use, thereby improving the safety of a battery.

In one or more embodiments, the reinforcement material may include two or more fibrous supports having different aspect ratios, whereby the mechanical properties of a battery insulation sheet formed using the same may be improved.

The aspect ratio difference between the two or more fibrous supports may be 1 to 5,000, 200 to 4,900, or 200 to 1,000. The aspect ratio difference may be applied to the two or more fibrous supports. As an example, if the two or more fibrous supports include a first fibrous support and a second fibrous support, the aspect ratio difference may refer to the aspect ratio difference between the first fibrous support and the second fibrous support. As another example, if the two or more fibrous supports include a first fibrous support, a second fibrous support, and a third fibrous support, the aspect ratio difference may refer to the aspect ratio difference between the first fibrous support and the second fibrous support, the aspect ratio difference between the second fibrous support and the third fibrous support, and the aspect ratio difference between the first fibrous support and the third fibrous support. By controlling the aspect ratio difference between the two or more fibrous supports to be within any of the above ranges, thermal insulation, fire resistance, and/or compressibility of the battery insulation sheet may be improved.

In one or more embodiments, the reinforcement material may include two or more selected from among (e.g., selected from the group consisting of) a first fibrous support, a second fibrous support, and a third fibrous support.

The aspect ratio of the first fibrous support may be 1 to 500, 10 to 500, or 200 to 400. The average diameter of the first fibrous support may be 8 µm to 12 µm. The average length of the first fibrous support may be 100 µm to 3,000 µm.

The aspect ratio of the second fibrous support may be 2 to 2,500, 50 to 300, or 70 to 150. The average diameter of the second fibrous support may be 8 µm to 20 µm. The average length of the second fibrous support may be 50 µm to 20,000 µm.

The aspect ratio of the third fibrous support may be 3 to 5,000, 1,000 to 5,000, or 800 to 1,200. The average diameter of the third fibrous support may be 8 µm to 12 µm. The average length of the third fibrous support may be 3,000 µm to 50,000 µm.

As used herein, the term "diameter" refers to an average circle diameter when the material's cross-section is circular, and refers to an average major axis length when the material's cross-section is non-circular.

In one or more embodiments, the reinforcement material may include a first fibrous support and a second fibrous support. In this case, the first fibrous support may be included so as to account for 1 to 90 parts by weight, 20 to 80 parts by weight, or 40 to 60 parts by weight, and the second fibrous support may be included so as to account for 1 to 90 parts by weight, 20 to 80 parts by weight, or 40 to 60 parts by weight, based on 100 parts by weight of the reinforcement material. In this case, compressibility of the battery insulation sheet may be improved by including the first fibrous support and the second fibrous support in a content ratio within any of the above ranges.

In one or more embodiments, the reinforcement material may include a first fibrous support and a third fibrous support. In this case, the first fibrous support may be included so as to account for 1 to 90 parts by weight, 20 to 80 parts by weight, or 40 to 60 parts by weight, and the third fibrous support may be included so as to account for 1 to 90 parts by weight, 20 to 80 parts by weight, or 40 to 60 parts by weight, based on 100 parts by weight of the reinforcement material. In this case, compressibility of the battery insulation sheet may be improved by including the first fibrous support and the third fibrous support in a content ratio within any of the above ranges.

In one or more embodiments, the reinforcement material may include a second fibrous support and a third fibrous support. In this case, the second fibrous support may be included so as to account for 1 to 90 parts by weight, 20 to 80 parts by weight, or 40 to 60 parts by weight, and the third fibrous support may be included so as to account for 1 to 90 parts by weight, 20 to 80 parts by weight, or 40 to 60 parts by weight, based on 100 parts by weight of the reinforcement material. In this case, compressibility of the battery insulation sheet may be improved by including the second fibrous support and the third fibrous support in a content ratio within any of the above ranges.

In one or more embodiments, the reinforcement material may include a first fibrous support, a second fibrous support, and a third fibrous support. In this case, the first fibrous support may be included so as to account for 10 to 60 parts by weight or 20 to 60 parts by weight, the second fibrous support may be included so as to account for 30 to 60 parts by weight or 40 to 60 parts by weight, and the third fibrous support may be included so as to account for 10 to 60 parts by weight, 10 to 40 parts by weight, or 10 to 30 parts by weight, based on 100 parts by weight of the reinforcement material. In this case, compressibility of the battery insulation sheet may be further improved by including the first fibrous support, the second fibrous support, and the third fibrous support in a content ratio within any of the above ranges.

Each of the two or more fibrous supports may include fiber used as a support for comparable (or suitable) insulating materials.

The fibrous support may be at least one selected from the group consisting of natural fiber, silica fiber, glass fiber, ceramic fiber, carbon fiber, graphite fiber, mineral fiber, and polymer fiber.

The natural fiber may be at least one selected from the group consisting of, for example, hemp, jute, flax, coir, Kenaf, and cellulose.

The ceramic fiber may be at least one selected from the group consisting of silicon carbide, silicon nitride, boron nitride, and aluminum silicon carbide.

The mineral fiber may be at least one selected from the group consisting of, for example, basalt, diatomite, alumina, boron, quartz, silica, slag, and rock.

The polymer fiber may be at least one selected from the group consisting of, for example, nylon, polyimide, polyamide, polybenzimidazole, polybenzoxazole, polyamideimide, polyethylene terephthalate, polybutylene terephthalate, polyester, polyethylene (PE), and polypropylene (PP). For example, the polymer fiber may include at least one selected from the group consisting of, without being limited to, polyimide, polyamide, and polybenzimidazole.

The fibrous support may be in the form of at least one selected from the group consisting of, for example, without being limited to, powder, wool, chop, felt, batting, and lofty batting.

The content of the reinforcement may be 5 wt% to 70 wt%, 25 wt% to 60 wt%, or 30 wt% to 50 wt%, based on the total amount (100 wt%) of solids in the aerogel composition. If a battery insulation sheet is manufactured using the aerogel composition of the present embodiments including the fibrous support within any of the above ranges, the mechanical properties of the battery insulation sheet may be improved.

In one or more embodiments, the aerogel may have a BET specific surface area of 500 $m^2$/g to 1,000 $m^2$/g. For example, the aerogel may have a BET specific surface area of 500 $m^2$/g to 950 $m^2$/g, 550 $m^2$/g to 950 $m^2$/g, or 600 $m^2$/g to 900 $m^2$/g. Because the aerogel having the BET specific surface area value within any of the above ranges is included, it may be possible to provide an insulation sheet capable of effectively or suitably preventing or reducing heat transfer and/or heat propagation between a plurality of cells. The BET may be determined according to DIN ISO 9277.

The average particle size D50 of the aerogel may be 5 $\mu$m to 200 $\mu$m, 10 $\mu$m to 100 $\mu$m, or 20 $\mu$m to 50 $\mu$m. Because the aerogel having the particle size within the above range is included, thermal insulation may be improved, whereby heat transfer between the plurality of cells may be delayed.

The average particle size D50 of particles may be defined as the particle size at 50% of the particle size distribution (the particle size corresponding to cumulative 50% of the volume of the particle size distribution). The average particle size D50 may be measured, for example, using any suitable method such as a laser diffraction method and/or scanning electron microscopy (SEM). Another method may be performed by using a measuring device with dynamic light scattering, analyzing data to count a number of particles relative to each particle size, and then calculating to obtain an average particle diameter D50. In the present specification, when particles are spherical, "diameter" indicates a particle diameter, and when the particles are non-spherical, the "diameter" indicates a major axis length.

The ratio of the average particle size of the aerogel to the average length of the fibrous support (e.g., the average length of the two or more fibrous supports) may be 1:1 to 1:10,000, 1:70 to 1:10,000, 1:6 to 1:17, or 1:1.5 to 1:2.5. By controlling the ratio of the average particle size of the aerogel to the average length of the fibrous support to be within any of the above ranges, thermal insulation, heat resistance, compressibility, and/or dustiness may be improved.

The content of the aerogel may be 10 wt% to 90 wt%, 30 wt% to 70 wt%, or 40 wt% to 60 wt%, based on the total amount (100 wt%) of solids in the aerogel composition. If a battery insulation sheet is manufactured using the aerogel composition including the aerogel in the amount within any of the above ranges, thermal insulation of the battery insulation sheet may be improved.

In one or more embodiments, the binder may include an aqueous polymer binder. For example, the aqueous polymer binder may be at least one selected from the group consisting of a water-based polymer, an anionic water-soluble polymer, a cationic water-soluble polymer, and a water-dispersible polymer.

The water-based polymer may be at least one selected from the group consisting of, for example, without being limited to, polyvinyl alcohol, polyethylene oxide, polyacrylamide, and polyvinylpyrrolidone.

The anionic water-soluble polymer may include at least one selected from the group consisting of carboxylic acid, sulfonic acid, sulfuric acid ester, phosphoric acid ester, and a polymer having functional groups of salts thereof. For example, the anionic water-soluble polymer may be a polymer having a carboxylic acid group, and may include, without being limited to, polymaleic acid as a specific example.

The cationic water-soluble polymer may include at least one selected from the group consisting of amine, ammonium, phosphonium, sulfonium, and a polymer having functional groups of salts thereof. For example, the cationic water-soluble polymer may be a polymer having an amine group, and may be at least one selected from the group consisting of, without being limited to, polyethylene amine and polyamine.

The water-dispersible polymer may be, without being limited to, at least one selected from the group consisting of water-dispersible polyurethane and water-dispersible polyester.

The binder may include a water-based polymer and a water-dispersible polymer. For example, the binder may include a water-based polymer having binder properties and dispersing properties and water-dispersible polyurethane having fire-resistant properties. For example, the binder may include polyvinyl alcohol and water-dispersible polyurethane.

The weight ratio of the water-based polymer to the water-dispersible polymer may be 1:1 to 1:5, 1:1 to 1:4, or 1:2 to 1:3. If the weight ratio of the water-based polymer to the water-dispersible polymer is within any of the above ranges, fire resistance and mechanical properties of the insulation sheet may be further improved in addition to the thermal insulation, dustiness, and compressibility of the insulation sheet.

The content of the binder may be 0.5 wt% to 20 wt%, 2 wt% to 15 wt%, or 8 wt% to 15 wt%, based on the total amount (100 wt%) of solids in the aerogel composition. If a battery insulation sheet is manufactured using the aerogel composition including the binder in the amount within any of the above ranges, dustiness of the battery insulation sheet may be improved.

In one or more embodiments, the dispersant may be at least one selected from the group consisting of a surfactant and a phosphate-based salt. For example, the dispersant may include at least one selected from among, without being limited to, a non-ionic surfactant, an anionic surfactant, an amphoteric surfactant, a natural surfactant such as lecithin, and phosphate.

Further inclusion of the dispersant may further improve the dispersion of the aerogel in the composition, whereby the fibrous support and the aerogel may be uniformly (e.g., substantially uniformly) dispersed.

The content of the dispersant may be 0.1 wt% to 6 wt%, 0.1 wt% to 5 wt%, or 0.1 wt% to 3 wt%, based on the total amount (100 wt%) of solids in the aerogel composition. If the dispersant is included within any of the above ranges, it may be possible to manufacture the aerogel composition at a suitably low cost and to manufacture a battery insulation sheet having excellent or suitable thermal insulation, fire resistance, mechanical properties, and dustiness using the aerogel composition.

In one or more embodiments, the binder and the dispersant may be included in a weight ratio of 1:0.001 to 1:0.67, 1:0.001 to 1:0.5, or 1:0.001 to 1:0.3. Mixing the binder and the dispersant in a weight ratio within any of the above ranges may result in more uniform dispersion of the aerogel in an aerogel layer.

In one or more embodiments, the reinforcement material may be included so as to account for 25 wt% to 60 wt%, the aerogel may be included so as to account for 30 wt% to 70 wt%, and the binder may be included so as to account for 2 wt% to 15 wt%, based on the total amount (100 wt%) of solids in the aerogel composition.

In one or more embodiments, the reinforcement material may be included so as to account for 30 wt% to 50 wt%, the aerogel may be included so as to account for 40 wt% to 60 wt%, and the binder may be included so as to account for 8 wt% to 15 wt%, based on the total amount (100 wt%) of solids in the aerogel composition. If the aerogel composition is formed within any of the above ranges, it may be possible to realize excellent or suitable thermal insulation and fire resistance while improving mechanical properties, and to improve the binding between the reinforcement material and the aerogel, thereby preventing or reducing dust generation.

In one or more embodiments, the reinforcement material may be included so as to account for 25 wt% to 60 wt%, the aerogel may be included so as to account for 30 wt% to 70 wt%, the binder may be included so as to account for 2 wt% to 15 wt%, and the dispersant may be included so as to account for 0.1 wt% to 5 wt%, based on the total amount (100 wt%) of solids in the aerogel composition.

In some embodiments, the reinforcement material may be included so as to account for 30 wt% to 50 wt%, the aerogel may be included so as to account for 40 wt% to 60 wt%, the binder may be included so as to account for 5 wt% to 10 wt%, and the dispersant may be included so as to account for 0.1 wt% to 3 wt%, based on the total amount (100 wt%) of solids in the aerogel composition. If the aerogel composition is formed within any of the above ranges, dispersibility of the aerogel may be improved, and therefore it may be possible to realize excellent or suitable thermal insulation and fire resistance while improving mechanical properties, and to improve the binding between the reinforcement material and the aerogel, thereby preventing or reducing dust generation.

In one or more embodiments, the solvent may be at least one selected from the group consisting of a polar solvent and a non-polar solvent.

The polar solvent may include water, an alcohol-based solvent, or a combination thereof.

Water may include, for example, purified water, deionized water, or a combination thereof.

The alcohol-based solvent may be at least one selected from the group consisting of, for example, without being limited to, methanol, ethanol, propanol, pentanol, butanol, hexanol, ethylene glycol, propylene glycol, diethylene glycol, and glycerol.

The non-polar solvent may include a hydrocarbon-based solvent. For example, the hydrocarbon-based solvent may be at least one selected from the group consisting of hexane, pentane, heptane, toluene, and benzene, and may be, without being limited to, an alkane solvent such as hexane, and/or a mixture (e.g., any suitable mixture or combination) including an alkane solvent.

The solvent may include water. The use of water as a solvent may effectively or suitably reduce raw material costs and post-processing costs. If water is used as a solvent, however, water may not be mixed well or suitably with aerogel, which is hydrophobic. In one or more embodiments, the aerogel may be dispersed evenly (or substantially evenly) by controlling the design of a mixing step (e.g., act or task), the mixing conditions, the addition of the binder and the dispersant, and/or the amount of the binder and the dispersant. This even (or substantially even) dispersion of the aerogel in the composition may enable the formation of a battery insulation sheet having excellent or suitable thermal insulation, fire resistance, mechanical properties, and dustiness at a suitably thin thickness without the use of a large (e.g., unsuitably large) amount of binder.

The solvent may be included such that the weight ratio of the solvent to the total amount of solids in the aerogel composition is 1:1 to 1:90. For example, the weight ratio of the solvent to the total amount of solids in the aerogel composition may be 1:50 to 1:70, 1:20 to 1:30, or 1:2 to 1:10. By controlling the weight ratio of the solvent to the total amount of solids in the aerogel composition to be within any of the above ranges, the viscosity may be controlled or selected to suitably coat the aerogel layer.

In one or more embodiments, the aerogel composition may further include a silane-based compound. The silane-based compound may be at least one selected from the group consisting of, for example, 3-(trimethoxysilyl)propylmethacrylate, methyltriethoxysilane, methyltrimethoxysilane, ethyltrimethoxysilane, octadecyltrimethoxysilane, ethyltriethoxysilane, and 3-glycidoxypropyltrimethoxysilane. Further inclusion of the silane-based compound may further improve dispersibility.

In one or more embodiments, an additive, such as a wetting agent, an emulsifier, a compatibilizer, a viscosity modifier, a pH modifier, a stabilizer, an antioxidant, an acid or base trapping agent, a metal inactivator, a defoamer, an antistatic agent, a thickener, an adhesion improver, a coupling agent, a flame retardant, an impact modifier, pigment, dye, a colorant, and/or a deodorant, may be optionally further included.

A method of manufacturing an aerogel composition according to one or more embodiments may include a step (e.g., act or task) of mixing a solvent with a functional material including a binder, a dispersant, or a combination thereof to manufacture a solvent mixture, a step (e.g., act or task) of mixing the solvent mixture with an aerogel to manufacture an aerogel mixture, and a step (e.g., act or task) of mixing the aerogel mixture with a reinforcement material to manufacture an aerogel composition, wherein the reinforcing material may include two or more fibrous supports, and the two or more fibrous supports may have different aspect ratios AR as represented by Formula 1.

In the step (e.g., act or task) of mixing the solvent with the functional material to manufacture the solvent mixture, the solvent may be mixed with the binder or may be mixed with the binder and the dispersant. A more detailed description of the solvent, the binder, and the dispersant may be the same as described above.

In the step (e.g., act or task) of mixing the solvent mixture with the aerogel to manufacture the aerogel mixture, the aerogel may be added in powder form, and a more detailed description of the aerogel may be the same as described above.

In the step (e.g., act or task) of mixing the aerogel mixture with the reinforcement material to manufacture the aerogel composition, a more detailed description of the reinforcement material may be the same as described above.

In each of the step (e.g., act or task) of mixing the solvent with the functional material including the binder, the dispersant, or the combination thereof to manufacture the solvent mixture, the step (e.g., act or task) of mixing the solvent mixture with the aerogel to manufacture the aerogel mixture, and the step (e.g., act or task) of mixing the aerogel mixture with the reinforcement material to manufacture the aerogel composition, mixing may be performed using a mixer. For example, the mixer may include, without being limited to, a planetary mixer and a Thinky mixer (e.g., THINKYMIXER).

For example, the planetary mixer may be used to mix the solvent mixture with the aerogel. The use of the planetary mixer to mix the solvent mixture with the aerogel may allow the aerogel to be uniformly (e.g., substantially uniformly) dispersed in the solvent.

The planetary mixer may be a device that may be used to mix and/or stir different substances in order to produce a homogeneous (or substantially homogenous) mixture. The planetary mixer may include a blade capable of performing planetary motion.

In one or more embodiments, the planetary mixer may include at least one selected from among one or more planetary blades and one or more high-speed dispersing blades. For example, the planetary mixer may include at least one planetary blade and at least one high-speed dispersing blade.

Each of the planetary blade and the high-speed dispersing blade may continuously rotate about an axis thereof. The rotation speed may be expressed in rotations per minute (rpm).

In one or more embodiments, the planetary mixer may include a first blade and a second blade having different axes of rotation. For example, the first blade may be a low speed blade, and the second blade may be a high speed blade. The low speed and the high speed refer to relative rotational speeds between the first blade and the second blade. For example, the first blade may be an open blade, and the second blade may be a Despa blade.

The rotational speed of the first blade may be, for example, 10 rpm to 100 rpm, 10 rpm to 60 rpm, or 30 rpm to 70 rpm. The rotational speed of the second blade may be, for example, 100 rpm to 2000 rpm, 100 rpm to 1000 rpm, 300 rpm to 1700 rpm, or 500 rpm to 1700 rpm.

If the functional material is added to and mixed with the solvent, the rotational speed of the first blade of the mixer may be 10 rpm to 60 rpm, 20 rpm to 50 rpm, or 30 rpm to 40 rpm, and the rotational speed of the second blade may be 300 rpm to 1700 rpm, 600 rpm to 1000 rpm, or 700 rpm to 800 rpm. If the solvent and the functional material are mixed with each other, as described above, the solvent mixture in which the binder, the dispersant, or the combination thereof is uniformly (e.g., substantially uniformly) dispersed may be manufactured to facilitate mixing of the aerogel in a subsequent step (e.g., act or task).

If the solvent mixture and the aerogel are mixed with each other, the rotational speed of the first blade of the mixer may be 30 rpm to 70 rpm, 40 rpm to 70 rpm, or 60 rpm to 70 rpm, and the rotational speed of the second blade may be 500 rpm to 1700 rpm, 600 rpm to 1600 rpm, or 800 rpm to 1500 rpm. If the aerogel is added to and mixed with the solvent mixture, as described above, the clumping together of the aerogel may be prevented or reduced, to induce (or achieve) a substantially uniform dispersion.

If the aerogel mixture and the fibrous support are mixed with each other, the rotational speed of the first blade of the mixer may be 10 rpm to 60 rpm, 20 rpm to 50 rpm, or 30 rpm to 40 rpm, and the rotational speed of the second blade may be 300 rpm to 1700 rpm, 400 rpm to 1500 rpm, or 800 rpm to 1200 rpm. Mixing the aerogel mixture with the fibrous support as described above may remove air bubbles in the composition, control viscosity, and/or facilitate dispersion of the fibrous support in the evenly (or suitably) dispersed aerogel, such that the aerogel may surround the periphery of the fibrous support in the composition. A binder may be present between the aerogel and the fibrous support to improve the binding of the aerogel and the fibrous support.

A battery insulation sheet according to one or more embodiments may include a first substrate, a second substrate, and an aerogel layer formed between the first substrate and the second substrate, wherein the aerogel layer may be formed using the aerogel composition according to the present embodiments.

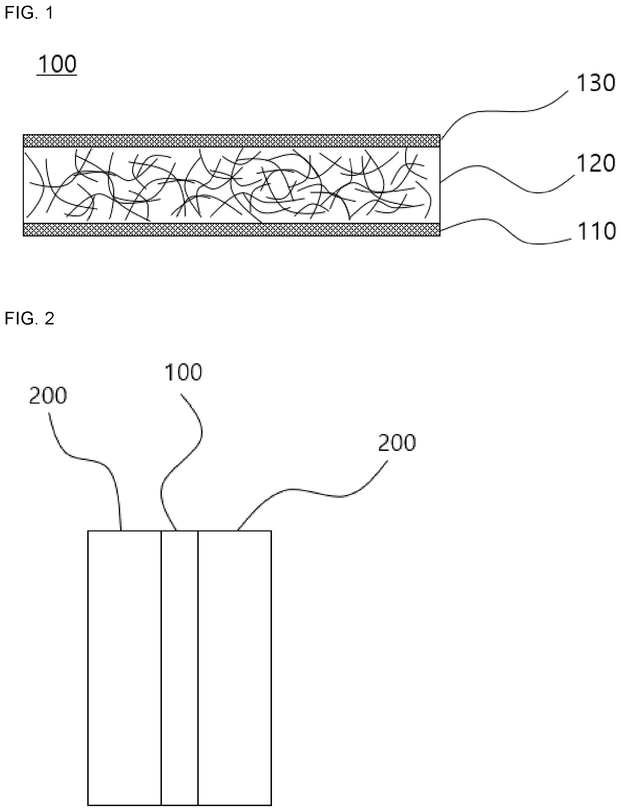

FIG. 1 is a schematic view showing the structure of a battery insulation sheet according to one or more embodiments. An embodiment including three fibrous supports is shown as a representative example, but other embodiments, such as those including two fibrous supports or four or more fibrous supports are not excluded.

Referring to FIG. 1, in one or more embodiments, the battery insulation sheet 100 may have a structure including a first substrate 110, an aerogel layer 120 formed on the first substrate 110, and a second substrate 130 formed on the aerogel layer 120. Although a first fibrous support, a second fibrous support, and a third fibrous support having different aspect ratios in the aerogel layer 120 are shown as lines having different average lengths and shapes, the fibrous supports do not necessarily have the structure shown and may vary in thickness. Components other than the first fibrous support, the second fibrous support, and the third fibrous support are not shown in order to more clearly illustrate the structure in which the first fibrous support, the second fibrous support, and the third fibrous support are distributed, and it should not be construed as the aerogel layer 120 not including components other than the reinforcement material. For example, the aerogel layer 120 may include one or more suitable components, in addition to the fibrous supports. In FIG. 1, the first substrate 110 and the second substrate 130 may be made of the same material or different materials.

As an aerogel layer including an aerogel composition according to one or more embodiments is formed between the first substrate and the second substrate, thermal insulation, fire resistance, and mechanical properties of the battery insulation sheet may be improved, thus preventing or reducing the risk of the aerogel falling off and creating dust if the battery insulation sheet is manufactured and/or installed in an apparatus.

FIG. 2 is a schematic view showing the battery insulation sheet according to the one or more embodiments formed between a plurality of cells.

Referring to FIG. 2, the battery insulation sheet 100 according to the embodiment may be formed between a plurality of cells 200 included in a battery module. The upper surface and the lower surface of the battery insulation sheet, i.e., the first substrate and the second substrate of the battery insulation sheet, may be arranged to each face corresponding cells adjacent thereto, respectively. If the battery insulation sheet 100 according to the embodiments is formed between the plurality of cells 200, it is possible to provide a battery module capable of blocking or reducing flames (e.g., fire or ignition) in one cell in advance, thereby maximally or suitably inhibiting or reducing the propagation of the flames to the other cell, thereby obtaining a battery module with a higher or improved level of safety, and a battery pack including the same.

In the battery insulation sheet, a more detailed description of the aerogel composition constituting the aerogel layer may be the same as described above.

One or more suitable substrates, such as, without being limited to, a resin, a metal, an inorganic material other than the metal, and/or a composite thereof, may be used as each of the first substrate and the second substrate. The form of the substrate may be, without being limited to, a film, a membrane, a sheet, and/or the like.

The resin may be at least one selected from the group consisting of, for example, polyethylene, polypropylene, polystyrene, polyethylene terephthalate, and polyamide.

The metal may be at least one selected from the group consisting of, for example, copper, nickel, cobalt, iron, chromium, vanadium, palladium, ruthenium, rhodium, molybdenum, tungsten, iridium, silver, gold, and platinum. If a substrate made of any of the above metals is used, the substrate may be subjected to anticorrosion treatment and/or insulating treatment as needed.

The inorganic material may be at least one selected from the group consisting of calcium carbonate ($CaCO_s$), talc, and mica.

For example, each of the first substrate and the second substrate may include an inorganic material, and in some embodiments, each of the first substrate and the second substrate may include mica. In this case, thermal insulation, durability, and/or the like of the insulation sheet may be improved.

In one or more embodiments, each of the two or more fibrous supports in the aerogel layer may have a vertical orientation, a horizontal orientation, or a combination thereof. For example, each of the two or more fibrous supports in the aerogel layer may have a substantially uniform vertical orientation and a substantially uniform horizontal orientation. In this case, compressibility of the aerogel layer may be further improved to absorb pressure applied from one cell to cells adjacent thereto during degradation and expansion of the cell, thereby improving the safety of the battery.

In one or more embodiments, the aerogel layer may be formed so as to have a monolayer structure or a multilayer structure. If the aerogel layer is formed so as to have a multilayer structure, the aerogel layer may be formed so as to have 2 to 10 layers, 2 to 7 layers, or 2 to 5 layers.

A method of manufacturing a battery insulation sheet according to one or more embodiments may include a step (e.g., act or task) of applying an aerogel composition according to the present embodiments to a first substrate and a step (e.g., act or task) of laminating a second substrate on the applied aerogel composition to form a laminate.

In the method of manufacturing the battery insulation sheet, a more detailed description of the substrate and the aerogel composition may be the same as described above.

The step (e.g., act or task) of applying the aerogel composition to the first substrate and the step (e.g., act or task) of laminating the second substrate on the applied aerogel composition may be performed using any suitable method.

The step (e.g., act or task) of applying the aerogel composition to the first substrate may be performed once or repeatedly performed twice or more.

In one or more embodiments, the method may further include a step (e.g., act or task) of pressing and drying the laminate after manufacturing the laminate.

The drying step (e.g., act or task) may be performed at a temperature of, for example, 25 °C to 100 °C, 45 °C to 90 °C, or 60 °C to 85 °C. If drying is performed under the above temperature conditions, a solid aerogel layer may be formed on the substrate without a separate adhesive member and/or adhesive, while preventing or reducing the risk of detachment between the substrate and the aerogel layer, and a coating layer of the aerogel may be formed around the periphery of two or more dispersed fibrous supports.

It may be possible to manufacture a battery insulation sheet without the use of a separate adhesive or the formation of an adhesive layer using the method of applying the aerogel composition according to one or more embodiments to a first substrate, laminating a second substrate on the aerogel composition to manufacture a laminate, and pressing and drying the laminate, whereby excellent or suitable thermal insulation, fire resistance, mechanical properties, and/or dustiness may be realized even with a relatively small thickness due to the substantially uniform dispersion of an aerogel.

Hereinafter, specific examples will be described. However, the following examples are intended only to illustrate and/or describe the disclosure and should not be construed as limiting the disclosure. Contents that are not described herein may be sufficiently technically inferred by those skilled in the art, and therefore a description thereof will not be provided.

**(Manufacture of battery insulation sheet)**

**Example 1**

**1. Manufacture of aerogel composition**

A solvent mixture was manufactured by adding polyvinyl alcohol (Sigma Aldrich), as a binder, to deionized water, as a solvent, and mixing the same at 30 rpm using an open blade and at 700 rpm using a Despa blade (e.g., Planetary Despa Mixer). Subsequently, an aerogel having a BET specific surface area value of 800 $m^2$/g and an average particle size D50 of 60 micrometers ($\mu$m) was added to the solvent mixture and mixed at 70 rpm using the open blade and at 1500 rpm using the Despa blade to manufacture an aerogel mixture. An aerogel composition was manufactured by adding a first fibrous support having an aspect ratio of 1, a second fibrous support having an aspect ratio of 2, and a third fibrous support having an aspect ratio of 3, as a reinforcement material, to the aerogel mixture in a weight ratio of 1:3:6, and mixing the same at 30 rpm using the open blade and at 1200 rpm using the Despa blade. A planetary mixer (DNTEK, PT-005) was used for mixing.

The solids content of the manufactured aerogel composition was found to be 50 wt% of the aerogel, 40 wt% of the reinforcement material, and 10 wt% of polyvinyl alcohol.

**2. Manufacture of battery insulation sheet**

A slurry of the manufactured aerogel composition was applied to a 0.1 mm thick mica sheet (Pamica, Muscovite), another 0.1 mm thick mica sheet was laminated thereon in a sandwich manner, and coating was performed using a roll-rolling method. Subsequently, an aerogel layer was formed by drying the obtained sheet at 60 °C for 24 hours to manufacture a battery insulation sheet. The total thickness of the manufactured battery insulation sheet was found to be 1.38 millimeters (mm).

**Example 2**

A battery insulation sheet was manufactured using substantially the same method as in Example 1 except that a first fibrous support, a second fibrous support, and a third fibrous support were added in a weight ratio of 3:4:3 as a reinforcement material.

**Example 3**

A battery insulation sheet was manufactured using substantially the same method as in Example 1 except that a first fibrous support, a second fibrous support, and a third fibrous support were added in a weight ratio of 6:3:1 as a reinforcement material.

**Example 4**

A battery insulation sheet was manufactured using substantially the same method as in Example 1 except that a first fibrous support, a second fibrous support, and a third fibrous support were added in a weight ratio of 2:6:2 as a reinforcement material.

**Example 5**

A battery insulation sheet was manufactured using substantially the same method as in Example 1 except that a first fibrous support having an aspect ratio of 10, a second fibrous support having an aspect ratio of 300, and a third fibrous support having an aspect ratio of 5,000 were used as a reinforcement material.

**Example 6**

A battery insulation sheet was manufactured using substantially the same method as in Example 1 except that a first fibrous support having an aspect ratio of 300, a second fibrous support having an aspect ratio of 100, and a third fibrous support having an aspect ratio of 1,000 were used as a reinforcement material.

### Example 7

A battery insulation sheet was manufactured using substantially the same method as in Example 1 except that a first fibrous support having an aspect ratio of 500, a second fibrous support having an aspect ratio of 50, and a third fibrous support having an aspect ratio of 1,000 were used as a reinforcement material.

### Example 8

### 1. Manufacture of aerogel composition

A solvent mixture was manufactured by adding polyvinyl alcohol (Sigma Aldrich), as a binder, and a surfactant (Triton-X100, Sigma Aldrich), as a dispersant, to deionized water, as a solvent, and mixing the same at 30 rpm using an open blade and at 700 rpm using a Despa blade. Subsequently, an aerogel having a BET specific surface area value of 800 $m^2/g$ and an average particle size D50 of 60 $\mu$m was added to the solvent mixture and mixed at 70 rpm using the open blade and at 1500 rpm using the Despa blade to manufacture an aerogel mixture. An aerogel composition was manufactured by adding a first fibrous support having an aspect ratio of 1, a second fibrous support having an aspect ratio of 2, and a third fibrous support having an aspect ratio of 3, as a reinforcement material, to the aerogel mixture in a weight ratio of 6:3:1, and mixing the same at 30 rpm using the open blade and at 1200 rpm using the Despa blade. A planetary mixer (DNTEK, PT-005) was used for mixing.

The solids content of the manufactured aerogel composition was found to be 50 wt% of the aerogel, 40 wt% of the reinforcement material, 9.9 wt% of polyvinyl alcohol, and 0.1 wt% of the dispersant.

### 2. Manufacture of battery insulation sheet

A slurry of the manufactured aerogel composition was applied to a 0.1 mm thick mica sheet (Pamica, Muscovite), another 0.1 mm thick mica sheet was laminated thereon in a sandwich manner, and coating was performed using a roll-rolling method. Subsequently, an aerogel layer was formed by drying the obtained sheet at 60 °C for 24 hours to manufacture a battery insulation sheet. The total thickness of the manufactured battery insulation sheet was found to be 1.38 mm.

### Comparative Example 1

### 1. Manufacture of aerogel composition

An aerogel composition was manufactured by adding polyvinyl alcohol (Sigma Aldrich), as a binder, and an aerogel having a BET specific surface area value of 800 $m^2/g$ to deionized water, as a solvent, and mixing the same. A planetary mixer (DNTEK, PT-005) was used for mixing.

The solids content of the manufactured aerogel composition was found to be 50 wt% of the aerogel and 50 wt% of polyvinyl alcohol.

### 2. Manufacture of battery insulation sheet

A slurry of the manufactured aerogel composition was applied to a 0.1 mm thick mica sheet (Pamica, Muscovite), another 0.1 mm thick mica sheet was laminated thereon in a sandwich manner, and coating was performed using a roll-rolling method. Subsequently, an aerogel layer was formed by drying the obtained sheet at 60 °C for 24 hours to manufacture a battery insulation sheet. The total thickness of the manufactured battery insulation sheet was found to be 1.38 mm.

### Comparative Example 2

A battery insulation sheet was manufactured using substantially the same method as in Example 1 except that a first fibrous support having an aspect ratio of 1 was used alone as a reinforcement material (e.g., no second or third fibrous support was used).

### Comparative Example 3

A battery insulation sheet was manufactured using substantially the same method as in Example 1 except that a second fibrous support having an aspect ratio of 2 was used alone as a reinforcement material (e.g., no first or third fibrous support was used).

**Comparative Example 4**

A battery insulation sheet was manufactured using substantially the same method as in Example 1 except that a third fibrous support having an aspect ratio of 3 was used alone as a reinforcement material (e.g., no first or second fibrous support was used).

**(Experimental Examples)**

**Experimental Example 1: SEM analysis**

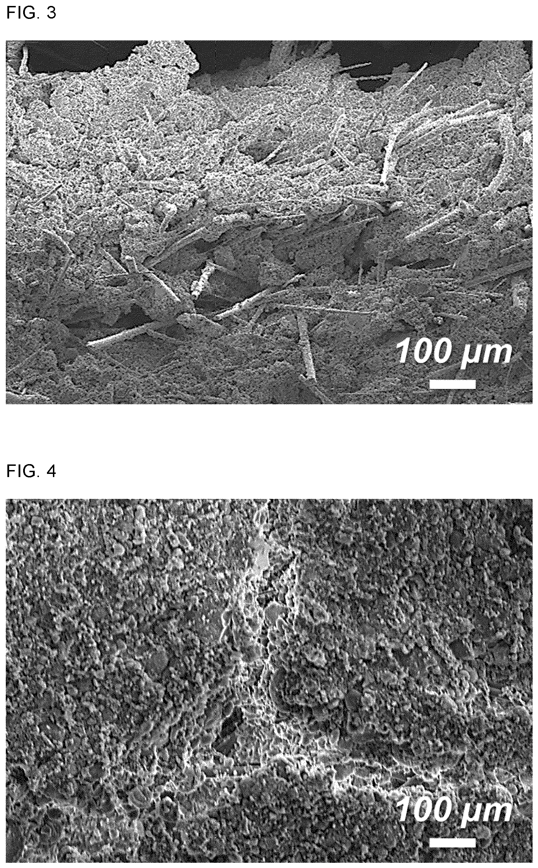

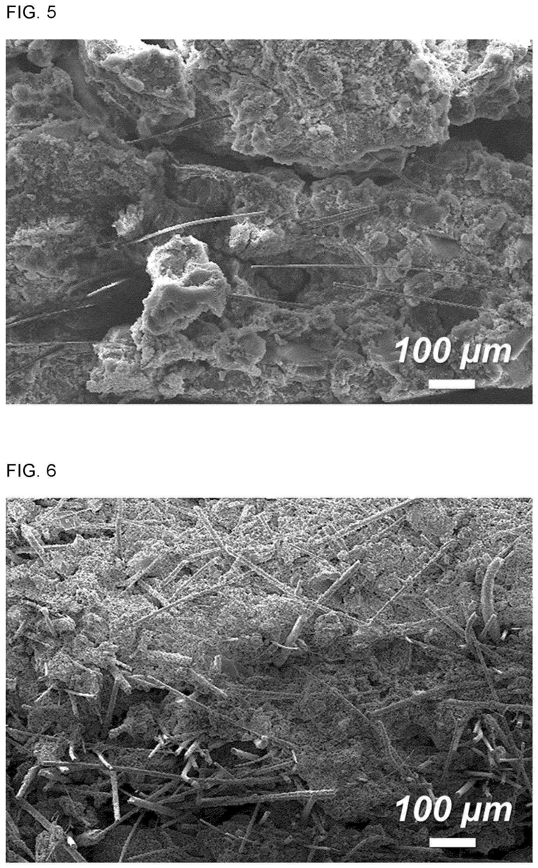

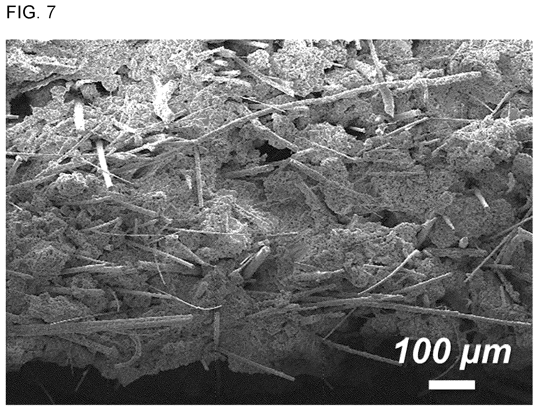

The section of the aerogel layer of each of the battery insulation sheets of Example 1 and Comparative Examples 1 to 4 was observed using a Hitachi S-4800 SEM, and the results are shown in FIGs. 3 to 7. FIG. 3 is an SEM image of the aerogel layer of the battery insulation sheet according to Example 1, FIG. 4 is an SEM image of the aerogel layer of the battery insulation sheet according to Comparative Example 1, FIG. 5 is an SEM image of the aerogel layer of the battery insulation sheet according to Comparative Example 2, FIG. 6 is an SEM image of the aerogel layer of the battery insulation sheet according to Comparative Example 3, and FIG. 7 is an SEM image of the aerogel layer of the battery insulation sheet according to Comparative Example 4.

It can be seen from Comparative Example 1 (FIG. 4) that no reinforcement material is present, and it can be seen from Comparative Example 2 (FIG. 5), in which a first fibrous support having an aspect ratio of 1 is used alone, that the first fibrous support includes fibers having a relatively small (e.g., unsuitable) average diameter. It can be seen from Comparative Example 3 (FIG. 6), in which a second fibrous support having an aspect ratio of 2 is used alone, that the second fibrous support includes fibers having a longer aspect ratio than in Comparative Example 2. It can be seen from Comparative Example 4 (FIG. 7), in which a third fibrous support having an aspect ratio of 3 is used alone, that the third fibrous support includes fibers having a longer aspect ratio than in Comparative Example 3. It can be seen from Example 1 (FIG. 3), in which a first fibrous support, a second fibrous support, and a third fibrous support are used, that the fibrous supports have different average diameters and average lengths.

**Experimental Example 2: Evaluation of compressibility**

Compressibility of each of the insulation sheets manufactured in Examples 1 to 8 and Comparative Examples 1 to 4 was evaluated.

After a zero point was adjusted, each insulation sheet was inserted between aluminum plates each having a thickness of 1 mm and compressed at a compression speed of 0.02 mm/second from 0 kN to 80 kN to measure a change in thickness of the insulation sheet using a UTM (universal testing machine). In this way, a compression test was performed, and the ratio of the thickness at 5 kN to the thickness at 40 kN was expressed as a compression rate. The results are shown in Table 1.

**Experimental Example 3: Evaluation of thermal insulation**

Thermal insulation of each of the insulation sheets manufactured in Examples 1 to 8 and Comparative Examples 1 to 4 was evaluated.

Each insulation sheet was placed between a pair of opposing 1 mm thick aluminum plates and was placed on a heat press. An upper plate of the heat press was heated to 350 °C, and a lower plate of the heat press was not heated and was maintained at a starting temperature of 40 °C. Subsequently, a pressure of 20 kN was applied to the lower plate of the heat press, and the temperature of the lower plate of the heat press in 11 minutes was measured. The results are shown in Table 1.

**Table 1**

|  | Compression rate (%) | Lower plate temperature (°C) |
|---|---|---|
| Example 1 | 51.5 | 80.1 |
| Example 2 | 56.1 | 79.5 |
| Example 3 | 58.6 | 75.5 |
| Example 4 | 60.1 | 76.4 |

(continued)

|  | Compression rate (%) | Lower plate temperature (°C) |
|---|---|---|
| Example 5 | 55.4 | 79.5 |
| Example 6 | 58.5 | 78.9 |
| Example 7 | 53.4 | 78.5 |
| Example 8 | 57.8 | 75.6 |
| Comparative Example 1 | 51.2 | 73.2 |
| Comparative Example 2 | 48.8 | 79.5 |
| Comparative Example 3 | 43.8 | 78.4 |
| Comparative Example 4 | 44.2 | 80.1 |

Referring to Table 1, it can be seen that Examples exhibit excellent or suitable compression properties, and it is believed, without being bound by any particular theory, that it is due to improved porosity and orientation.

Referring to Examples 1 to 4, the results of the evaluation of the compression properties depending on the content ratio of the first fibrous support, the second fibrous support, and the third fibrous support are shown, and it can be seen therefrom that excellent or suitable physical properties are achieved if the first fibrous support is included so as to account for 10 to 60 parts by weight, the second fibrous support is included so as to account for 30 to 60 parts by weight, and the third fibrous support is included so as to account for 10 to 60 parts by weight as the reinforcement material and that better physical properties are achieved if the first fibrous support is included so as to account for 20 to 60 parts by weight, the second fibrous support is included so as to account for 40 to 60 parts by weight, and the third fibrous support is included so as to account for 10 to 30 parts by weight as the reinforcement material.

Referring to Examples 1 and 5 to 7, the results of the evaluation of the compression properties depending on the aspect ratio of each of the first fibrous support, the second fibrous support, and the third fibrous support are shown, and it can be seen therefrom that excellent or suitable compression properties are achieved if the aspect ratio of the first fibrous support is 10 to 500, the aspect ratio of the second fibrous support is 50 to 300, and the aspect ratio of the third fibrous support is 1,000 to 5,000 and that better compression properties are achieved if the aspect ratio of the first fibrous support is 200 to 400, the aspect ratio of the second fibrous support is 70 to 150, and the aspect ratio of the third fibrous support is 800 to 1,200.

It can be seen from Example 8 that the compression properties are further improved if the binder and the dispersant are mixed to manufacture the aerogel composition.

It can be seen from Comparative Example 1 that the compression properties are very (e.g., unsuitably) low because no reinforcement material is included, and it can be seen from Comparative Examples 2 to 4 that the compressive properties are lower than in Examples if a reinforcement material including only one fibrous support is used.

In the battery insulation sheets of Examples, there was no significant difference in thermal insulation compared to Comparative Example 1, despite the use of a fibrous support having relatively low thermal insulation and the combination of fibrous supports each having a relatively large aspect ratio.

Therefore, it can be seen that a battery insulation sheet according to one or more embodiments has structurally enhanced mechanical properties while maintaining thermal insulation.

As is apparent from the above description, a battery insulation sheet manufactured using an aerogel composition according to one or more embodiments may have excellent or suitable thermal insulation, fire resistance, and mechanical properties while having excellent or suitable mechanical properties, such as durability and/or compressibility, suitably low manufacturing process cost, and at the same time may prevent or reduce generation of dust from the aerogel during a manufacturing process and in actual use.

**Claims**

1.   An aerogel composition comprising:

a reinforcement material comprising two or more fibrous supports;
an aerogel;
a functional material comprising a binder, a dispersant, or a combination thereof; and
a solvent,
wherein

the two or more fibrous supports have different aspect ratios (AR) as represented by Formula 1:

## Formula 1

$$AR = L/D,$$

in Formula 1, L indicates an average length of each fibrous support of the two or more fibrous supports, and D indicates an average diameter of each fibrous support of the two or more fibrous supports.

2. The aerogel composition as claimed in claim 1, wherein an aspect ratio difference between the two or more fibrous supports is 1 to 5,000.

3. The aerogel composition as claimed in claim 1 or 2, wherein the aerogel has a BET specific surface area of 500 $m^2/g$ to 1,000 $m^2/g$, determined according to DIN ISO 9277.

4. The aerogel composition as claimed in any one of the preceding claims, wherein the aerogel has an average particle size (D50) of 5 $\mu$m to 200 $\mu$m measured by scanning electron microscopy (SEM).

5. The aerogel composition as claimed in any one of the preceding claims, wherein a ratio of an average particle size of the aerogel to an average length of the two or more fibrous supports is 1:1 to 1:10,000.

6. The aerogel composition as claimed in any one of the preceding claims, wherein

   the binder comprises an aqueous polymer binder, and
   the aqueous polymer binder is at least one selected from a group consisting of a water-based polymer, an anionic water-soluble polymer, a cationic water-soluble polymer, and a water-dispersible polymer.

7. The aerogel composition as claimed in any one of the preceding claims, wherein the binder in an amount of 0.5 wt% to 20 wt% based on a total amount (100 wt%) of solids in the aerogel composition.

8. The aerogel composition as claimed in any one of the preceding claims, wherein the dispersant is at least one selected from a group consisting of a surfactant and a phosphate-based salt.

9. The aerogel composition as claimed in any one of the preceding claims, wherein the dispersant is in an amount of 0.1 wt% to 6 wt% based on a total amount (100 wt%) of solids in the aerogel composition.

10. The aerogel composition as claimed in any one of the preceding claims, wherein the solvent is at least one selected from a group consisting of a polar solvent and a non-polar solvent.

11. The aerogel composition as claimed in any one of the preceding claims, wherein, based on a total amount (100 wt%) of solids in the aerogel composition, the reinforcement material is in an amount of 5 wt% to 70 wt%, the aerogel is in an amount of 10 wt% to 90 wt%, and the functional material is in an amount of 0.5 wt% to 20 wt% .

12. A method of manufacturing an aerogel composition, the method comprising:

    mixing a solvent with a functional material comprising a binder, a dispersant, or a combination thereof to manufacture a solvent mixture;
    mixing the solvent mixture with an aerogel to manufacture an aerogel mixture; and
    mixing the aerogel mixture with a reinforcement material to manufacture an aerogel composition, wherein:
    the reinforcing material comprises two or more fibrous supports,
    the two or more fibrous supports have different aspect ratios (AR) as represented by Formula 1:

## Formula 1

$$AR = L/D,$$

in Formula 1, L indicates an average length of each fibrous support of the two or more fibrous supports and D indicates an average diameter of the each fibrous support of the two or more fibrous supports.

13. A battery insulation sheet (100) comprising:

a first substrate (110);
a second substrate (130); and
an aerogel layer (120) between the first substrate (110) and the second substrate (130),
wherein the aerogel layer comprises the aerogel composition as claimed in claim 1.

14. A method of manufacturing a battery insulation sheet (100), the method comprising:

applying the aerogel composition as claimed in claim 1 to a first substrate (110); and
laminating a second substrate (130) on the applied aerogel composition to form a laminate.

15. The method as claimed in claim 14, further comprising pressing and drying the laminate.

FIG. 1

<u>100</u>

130

120

110

FIG. 2

200

100

200

FIG. 3

FIG. 4

FIG. 5

FIG. 6

FIG. 7